(19) Europäisches Patentamt
European Patent Office
Office européen des brevets

(11) Numéro de publication: **0 004 352**
**B1**

(12) **FASCICULE DE BREVET EUROPEEN**

(45) Date de publication du fascicule de brevet: **25.11.81**

(51) Int. Cl.³: **A 23 L 1/226**, A 23 L 2/26, C 07 D 471/04 //A24B15/38

(21) Numéro de dépôt: **79100799.0**

(22) Date de dépôt: **15.03.79**

(54) **Composés azotés bicycliques et leur utilisation en tant qu'ingrédients aromatisants.**

(30) Priorité: **16.03.78 CH 2863/78**

(43) Date de publication de la demande:
**03.10.79 Bulletin 79/20**

(45) Mention de la délivrance du brevet:
**25.11.81 Bulletin 81/47**

(84) Etats Contractants Désignés:
**CH DE FR GB IT NL SE**

(56) Documents cités:
**DE - A - 2 433 840**
**DE - A - 2 818 290**

(73) Titulaire: **FIRMENICH SA**
**Case postale 239**
**CH-1211 Genève 8 (CH)**

(72) Inventeur: **Flament, Ivon**
**6, ch. du Fief-de-Chapitre**
**CH-1213 Petit-Lancy/GE (CH)**

(74) Mandataire: **Weinhold, Peter, Dr. et al,**
**Siegfriedstrasse 8**
**D-8000 München 40 (DE)**

**EP 0 004 352 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

Composés azotés bicycliques et leur utilisation en tant qu'ingrédients aromatisants

La présente invention se rapporte au domaine des arômes. Elle a trait en particulier à l'utilisation de composés azotés bicycliques de formule

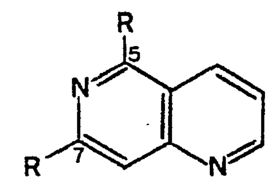

(I)

dans laquelle chacun des symboles R représente un radical alkyle inférieur, un atome d'hydrogène ou l'un d'entre eux un radical alkyle inférieur et l'autre l'hydrogène, en tant qu'ingrédients aromatisants pour l'aromatisation d'aliments, de boissons, de préparations pharmaceutiques et du tabac.

La présente invention se rapporte en outre à une composition aromatisante caractérisée en ce qu'elle contient en tant qu'ingrédient actif un composé azoté bicyclique de formule (I).

L'invention a également trait à un aliment ou une boisson contenant, en tant qu'ingrédient aromatisant, un composé azoté bicyclique de formule (I).

La présente invention concerne enfin un aliment à base de viande ou imitant la viande caractérisé en ce qu'il contient, en tant qu'ingrédient aromatisant, un composé azoté bicyclique de formule (I).

Comme indiqué ci-dessus, le symbole R peut représenter un radical alkyle inférieur. De préférence R représente un radical alkyle contenant de 1 à 3 atomes de carbone, par exemple méthyle, éthyle, propyle ou isopropyle. Suivant un mode d'exécution préférentiel de la présente invention, des effets particulièrement intéressants ont été observés par l'utilisation des composés azotés de formule (I) dans laquelle l'un des substituants R représente un radical méthyle et l'autre un atome d'hydrogène, ou dans laquelle chacun desdits substituants représente un atome d'hydrogène.

Ces derniers composés, définis comme 5-méthyl-1,6-naphtyridine, 7-méthyl-1,6-naphtyridine et 1,6-naphtyridine, respectivement, sont des entités chimiques connues [voir à ce sujet: Chem. Pharm. Bull (Tokyo) *6*, 263—9 (1958) tel qu'indiqué dans Chem. Abstr. *53*, 371d (1959)]; leurs propriétés aromatisantes cependant n'ont pas été décrites jusqu'à ce jour.

Il a été maintenant découvert que les composés de formule (I) développent des propriétés organoleptiques fort intéressantes. Ils servent notamment à conférer aux produits dans lesquels on les incorpore des notes gustatives de type animal et brûlé. De tels caractéres sont particulièrement recherchés dans le processus d'aromatisation de la viande, ou des produits viandeux en général. Bien entendu, l'utilisation des composés de formule (I) peut être étendue à bon nombre d'aliments autres que la viande, particulièrement à ceux qui se distinguent par leur caractère rôti, torréfié ou brûlé.

Les proportions dans lesquelles les composés de formule (I) développent des effets aromatisants intéressants sont comprises dans une gamme étendue de valeurs. Da préférence, ils sont utilisés à des concentrations comprises entre environ 5 et 100 ppm (parties par million) en poids par rapport au poids total de l'aliment dans lequel ils sont incorporés. Les limites indiquées ci-dessus ne sauraient cependant être interprétées de façon restrictive, l'utilisateur pouvant déterminer la teneur exacte désirée suivant la nature des produits soumis à l'aromatisation et le goût spécifique souhaité.

Les composés de l'invention peuvent être utilisés seuls ou, de préférence, sous forme d'une composition en mélange avec d'autres ingrédients aromatisants. Ils peuvent être incorporés au cours de n'importe quel stade de fabrication de l'aliment ou de la boisson choisis, et de préférence, ils sont ajoutés sous forme de solution dans l'un des solvants comestibles usuels, tel l'alcool éthylique, le dipropylène-glycol ou la triacétine.

Les composés de l'invention peuvent être préparés conformément à des mèthodes usuelles, notamment suivant le procédé décrit dans la littérature indiquée plus haut [Chem. Abstr. *53*, 371d (1959) ou Chem. Comm. 3 (1967)].

L'invention est illustrée d'une manière plus détaillée par les exemples suivants.

Exemple 1

On a procédé à l'évaluation des propriétés gustatives de la 1,6-naphtyridine et de la 5-méthyl-1,6-naphtyridine en ajoutant lesdits composés, à raison de 15 et, respectivement, 30 ppm en poids par rapport au poids total de la solution obtenue, à une solution aqueuse saline contenant 0,5% de NaCl.

Les goût des boissons ainsi obtenues a été jugé comme étant brûlé et animal.

Exemple 2

On a reconstitué un bouillon de viande de boeuf en mélangeant les ingrédients suivants (parties en poids):

| | |
|---|---|
| Extrait de viande de boeuf commercial | 100 |
| Glutamate de sodium (sel monosodique) | 10 |
| Mélange 50:50 de 5-inositate de sodium et guanilate de sodium (sel disodique) | 0,05 |
| Chlorure de sodium | 80 |
| Acide lactique | 5 |
| Eau | 9'808 |
| | 10'000,05 |

A un litre du bouillon ci-dessus on a ajouté à raison de 10, respectivement 25 ppm, la 1,6-naphtyridine et la 5-méthyl-1,6-naphtyridine et les aliments ainsi obtenus ont été soumis à une évaluation gustative. Les experts aromaticiens, appelés à effectuer cette évaluation, ont déclaré que les aliments aromatisés présentaient, par comparaison avec un échantillon non aromatisé, une note brûlée-animale.

## Revendications

1. Utilisation d'un composé azoté bicyclique de formule

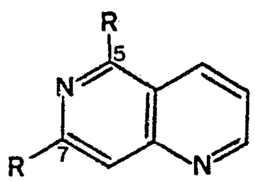

(I)

dans laquelle chacun des symboles R représente un radical alkyle inférieur, un atome d'hydrogène ou l'un d'entre eux un radical alkyle inférieur et l'autre un hydrogène, en tant qu'ingrédient aromatisant pour l'aromatisation d'aliments, de boissons, de préparations pharmaceutiques et du tabac.

2. Composition aromatisante caractérisée en ce qu'elle contient en tant qu'ingrédient actif un composé azoté bicyclique de formule (I), telle qu'indiquée à la revendication 1.

3. Un aliment ou une boisson contenant, en tant qu'ingrédient aromatisant, un composé azoté bicyclique de formule (I), telle qu'indiquée à la revendication 1.

4. Un aliment à base de viande, ou imitant la viande, caractérisé en ce qu'il contient un composé azoté bicyclique de formule (I), telle qu'indiquée à la revendication 1.

5. Un aliment à base de viande, ou imitant la viande, selon la revendication 4, caractérisé en ce qu'il contient en tant que composé azoté bicyclique de formule (I) la 1,6-naphtyridine.

6. Un aliment à base de viande, ou imitant la viande, selon la revendication 4, caractérisé en ce qu'il contient en tant que composé azoté bicyclique de formule (I) la 5-méthyl-1,6-naphtyridine.

## Patentansprüche

1. Verwendung einer bicyclischen, Stickstoff enthaltenden Verbindung der Formel

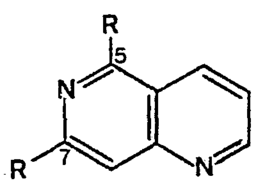

(I)

worin jedes der Symbole R einen niedrigen Alkylrest oder ein Wasserstoffatom darstellt oder eines dieser Symbole einen niedrigen Alkylrest und das andere einen Wasserstoff bezeichnen, als Aromamittel zur Aromatisierung von Lebensmitteln, Getränken, pharmazeutischen Präparaten und Tabak.

2. Aromakomposition, dadurch gekennzeichnet, dass sie als wirksamen Bestandteil eine bicyclische, Stickstoff enthaltende Verbindung der Formel (I) gemäss Anspruch 1 enthält.

3. Ein Lebensmittel oder ein Getränk, dadurch gekennzeichnet, dass es als Aromamittel eine bicyclische, Stickstoff enthaltenden Verbindung der Formel (I) gemäss Anspruch 1 enthält.

4. Ein Fleisch enthaltendes oder Fleisch imitierendes Lebensmittel, dadurch gekennzeichnet, dass dieses eine bicyclische, Stickstoff enthaltende Verbindung der Formel (I) gemäss Anspruch 1 enthält.

5. Ein Fleisch enthaltendes oder Fleisch imitierendes Lebensmittel gemäss Anspruch 4, dadurch gekennzeichnet, dass es als bicyclische, Stickstoff enthaltende Verbindung der Formel (I) 1,6-Naphthyridin enthält.

6. Ein Fleisch enthaltendes oder Fleisch imitierendes Lebensmittel gemäss Anspruch 4, dadurch gekennzeichnet, dass es als bicyclische, Stickstoff enthaltende Verbindung der Formel (I) 5-Methyl-1,6-naphthyridin enthält.

## Claims

1. Utilization of a bicyclic nitrogen-containing compound of formula

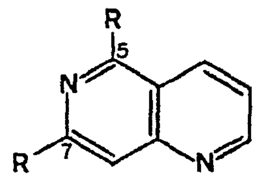

(I)

wherein each of symbols R represents a lower alkyl radical or a hydrogen atom, or one of them represents a lower alkyl radical and the other hydrogen, as a flavouring ingredient for the aromatization of foodstuffs, beverages, pharmaceutical preparations and tobacco.

2. A flavouring composition characterized in that it contains as active ingredient a bicyclic nitrogen-containing compound of formula (I) as defined in claim 1.

3. A foodstuff or a beverage containing as flavouring ingredient, a bicyclic nitrogen-containing compound of formula (I) as defined in claim 1.

4. A meat-containing or meat-imitating foodstuff, characterized in that it contains a bicyclic nitrogen-containing compound of formula (I) as defined in claim 1.

5. A meat-containing or meat-imitating foodstuff in accordance with claim 4, characterized in that it contains as bicyclic nitrogen-containing compound of formula (I), 1,6-naphthyridine.

6. A meat-containing or meat-imitating foodstuff in accordance with claim 4, characterized in that it contains as bicyclic nitrogen-containing compound of formula (I), 5-methyl-1,6-naphthyridine.